# EUROPÄISCHE PATENTANMELDUNG

(11) **EP 0 728 982 A1**
(43) Veröffentlichungstag der Anmeldung: **28.08.1996**
(21) Anmeldenummer: 96102667.1
(22) Anmeldetag: 22.02.1996
(51) Int. Cl.: F16L 55/00

(54) **Sicherungsmanschette für Hochdruckschläuche unf Pflaster zur Herstellung einer Sicherungsmanschette**

(30) Priorität: 24.02.1995 DE 29503167 U
(71) Anmelder: STAHLGRUBER OTTO GRUBER GMBH & CO., D-81675 München (DE)
(72) Erfinder: Busse, Günter, D-85586 Poing (DE); Dietz, Bernd, D-85665 Moosach (DE)
(74) Vertreter: Beetz & Partner Patentanwälte

(57) **Zusammenfassung**

Die Erfindung betrifft eine Sicherungsmanschette (1) für Hochdruckschläuche (2), die einen auf den Hochdruckschlauch (2) aufgeklebten oder aufvulkanisierten Gummi- oder Kunststoffmantel (1) aufweist, in dem ein oder mehrere Zugseile (14) im wesentlichen axial verlaufend angeordnet sind. Am Stirnende ist ein ösenartiges Befestigungsglied (3) vorgesehen. Die Zugseile (14) sind nebeneinander in mehreren Schlaufen im Gummi- oder Kunststoffmantel (1) vollständig eingebettet.

## Beschreibung

Die Erfindung betrifft eine Sicherungsmanschette für Hochdruckschläuche, bestehend aus einem auf den Hochdruckschlauch aufgeklebten oder aufvulkanisierten Kunststoff- oder Gummimantel, in dem mindestens ein im wesentlichen axial verlaufendes Zugseil angeordnet ist, das am stirnseitigen Ende ein ösenartiges Befestigungsglied aufweist. Die Erfindung betrifft weiterhin ein Pflaster zur Herstellung einer solchen Sicherungsmanschette für Hochdruckschläuche.

Hochdruckschlauchleitungen müssen besonderen sicherheitstechnischen Anforderungen genügen, insbesondere wenn sie als sog. Schleppleitungen bei verfahrbaren Maschinen eingesetzt werden und Biegebelastungen ausgesetzt sind.

Beispielsweise bei sog. Hochdruckwasserstrahlmaschinen, wie Wasserstrahlschneidanlagen, müssen die Schlauchleitungen für Betriebsdrücke von 250 bis über 2500 · 10⁵ Pa ausgelegt sein. Bei zusätzlichen dynamischen Belastungen können Ermüdungsbrüche des Schlauches, insbesondere im Bereich der Schlaucharmaturen auftreten. Bei einem Abriß oder Bruch des Schlauches führt das freie Schlauchende durch die hohe Impulskraft des austretenden Druckfluids unkontrollierte Bewegungen aus. Das mit hohem Druck und ggf. mit hoher Temperatur ausgespritzte Druckfluid und auch die frei wirbelnden Schlauchenden können zu Beschädigungen der Maschinen und auch zu Verletzungen des Bedienungspersonals führen.

Zur Vermeidung dieser Gefahren werden bisher sog. Kabelziehstrümpfe aus einem netzartigen Stahldrahtgeflecht verwendet, die an einem Ende eine Öse zur Befestigung z.B. an einem ortsfesten Bauteil aufweisen, und deren anderes Ende zur Aufnahme und Halterung des Hochdruckschlauches ausgebildet ist. Derartige Kabelziehstrümpfe haben jedoch nur eine relativ geringe Elastizität und sind für Schläuche mit extrem hohem Druck nur bedingt geeignet, da die tatsächlich wirksamen relativ dünnen Einzelkabel des Metallgeflechts brechen und auch den Außenmantel des Schlauchs beschädigen können.

In der DE-A-43 24 943 ist eine flexible hohlzylindrische Sicherungsmanschette aus z.B. Gummi beschrieben, welche auf dem Hochdruckschlauch durch Kleben oder Vulkanisation befestigt wird und mindestens ein Zugseil enthält, das zwischen dem Gummi und dem Schlauch in axialer Richtung verläuft und an einem Ende eine vorstehende Öse zum Anschließen an einer Halterung od. dgl. aufweist. Im Berstfall kann das sich nur in axialer Richtung erstreckende Seil aus der Manschette herausgezogen werden, wodurch die Sicherungsfunktion der Manschette verlorengeht.

Aufgabe der Erfindung ist es, eine Sicherungsmanschette für Hochdruckschläuche zu schaffen, die einen sicheren Halt des Schlauchs im Berstfall gewährleistet. Ferner soll eine Möglichkeit aufgezeigt werden, um eine solche Sicherungsmanschette auf einfache und kostengünstige Weise herzustellen und auf bestehenden Hochdruckschläuchen sicher zu befestigen.

Erfindungsgemäß wird diese Aufgabe dadurch gelöst, daß ein oder mehrere Zugseile schlaufenförmig nebeneinander angeordnet und vollständig im Gummi- und/oder Kunststoffmaterial fest eingebettet sind.

Durch die feste vollständige Einbettung der Zugseile im Manschettenmaterial und durch die schlaufenförmige Anordnung ihrer hinteren Endabschnitte ergibt sich eine hochfeste Verankerung im Manschettenmaterial, so daß auch bei extrem hohen Impulskräften nach einem Schlauchbruch die durch die Einbettung geschützten Zugseile nicht aus dem Manschettenmaterial herausgezogen werden können und eine sichere Halterung des nach einem Bruch freien Schlauchendes erreicht wird. Durch das Vorsehen von mehreren Zugsträngen wird eine weiter verbesserte Kraftverteilung in der Manschette erzielt, da die Kraftübertragungsfläche in der Manschette vergrößert wird. Weiterhin vermindert sich dadurch die Wandstärke und damit die Steifigkeit der Manschette.

Gemäß einer zweckmäßigen Ausgestaltung der Erfindung besteht jedes stirnseitige Befestigungsglied aus einer stirnseitig an den Mantel angeformten zugfesten Lasche, die eine eingebettete formsteife Kausche aufweist, die von den Zugseilen umschlungen wird. Durch eine derartige Ausbildung kann eine optimale Kraftübertragung von den Zugseilen auf die Lasche erfolgen, wobei weiterhin Knickbrüche der Zugseile verhindert werden, da der minimale Biegeradius der Zugseile durch die Form der Kausche begrenzt ist. Statt der Laschen können auch stirnseitige Taschen in der Manschette ausgebildet sein, in welche ein z.B. hakenförmiges Gegenstück eingreifen kann.

Gemäß einer weiteren zweckmäßigen Ausgestaltung der Erfindung kann nur ein Zugseil endlos in mehreren Schlaufen in dem Manschettenmaterial über die jeweiligen Kauschen verlaufend verlegt sein. Dadurch kann die Zugfestigkeit weiter erhöht werden, da durch die Endlosverlegung keine Materialschwächungen und Spannungsspitzen an etwaigen Verbindungsstellen der Zugseile auftreten.

Die Zugseile bestehen vorteilhaft aus Aramidfasern, die sich durch eine hohe Festigkeit sowie durch eine gute Formstabilität auszeichnen und einen flexiblen und flachen Aufbau der Sicherungsmanschette ermöglichen. Die Zugseile können auch aus anderen Werkstoffen, z.B. aus Stahldrähten oder anderen Kunststoff- bzw. Kohlenstoffasern bestehen. Gegebenenfalls kann sich auch eine Kombination von verschiedenen Werkstoffen als vorteilhaft erweisen, wobei beispielsweise das eine Material eine hohe Festigkeit aufweist und das andere eine hohe Elastizität. Dadurch käme es bei einer ruckartigen Zugbelastung des Zugelements zunächst zu einer verstärkten Impulsaufnahme durch die hochfesten Zugseile und anschließend, nachdem der auftretende Kraftimpuls schon etwas abgedämpft wurde, zu einer Aufnahme der verbleibenden Kraft durch die elastischeren Werkstoffe. Durch eine derartige Werkstoffkombination könnte somit der Sicherungseffekt der Manschette weiter erhöht werden.

Gegenstand der Erfindung ist ferner ein Pflaster zur Herstellung der Sicherungsmanschette, welches in Form eines in etwa ebenen rechteckigen Zuschnitts aus einem Gummi- oder Kunststoffmaterial ausgebildet ist, in dem die schlaufenförmig verlaufenden Zugseile vollständig fest eingebettet sind. Das Pflaster weist an einer Stirnkante zwei voneinander beabstandete vorstehende Laschen auf, in denen die von den Zugseilen umschlungenen formsteifen Kauschen eingebettet sind. Das biegsame Pflaster wird um den Schlauch gelegt, so daß sich seine beiden Längsränder überlappen und wird durch einen Klebe- bzw. Vulkanisierungsvorgang fest mit dem Hochdruckschlauch verbunden. Auf diese Weise können auch bereits installierte Hochdruckschläuche nachträglich mit der erfindungsgemäßen Sicherungsmanschette ausgestattet werden.

Durch die erfindungsgemäße Ausbildung der Sicherungsmanschette kann in vorteilhafter Weise gewährleistet werden, daß der Druckschlauch bei einem Bersten desselben oder beim Bersten seiner Armatur sicher über ein mit dem Befestigungsglied verbundenes Halterungselement gehalten werden kann.

Im folgenden werden Ausführungsbeispiele der Erfindung anhand der Zeichnungen näher erläutert. Es zeigen:
- Fig. 1a, 1b: einen schematischen Längsschnitt einer auf dem Außenmantel bzw. auf den Schlaucharmierungen eines Hochdruckschlauchs befestigten Manschette;
- Fig. 2: eine schematische Draufsicht auf das erfindungsgemäße Pflaster;
- Fig. 3: eine Schnittansicht entlang der Linie A-A der Fig. 2;
- Fig. 4: eine Schnittansicht entlang der Linie B-B der Fig. 2, und
- Fig. 5: eine perspektivische Ansicht einer auf einem Hochdruckschlauch befestigten Sicherungsmanschette.

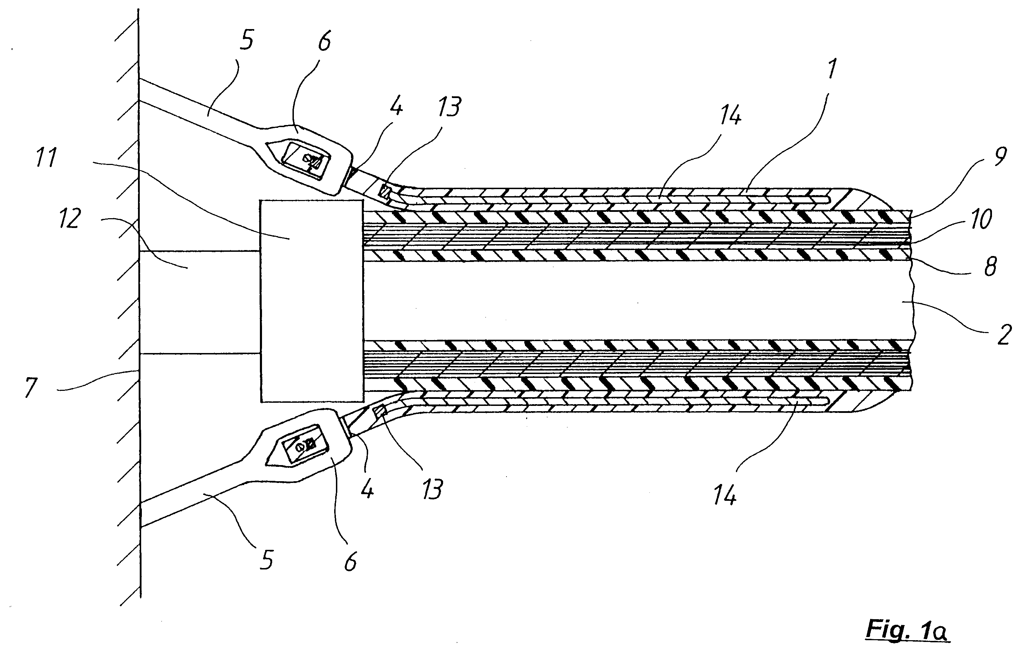

Die Fig. 1a zeigt eine Sicherungsmanschette 1, die auf dem Außenmantel 9 eines Hochdruckschlauchs 2 fest aufvulkanisiert ist. Die Sicherungsmanschette 1 weist stirnseitig zwei diametral gegenüberliegende Befestigungslaschen 3 mit Öffnungen 4 auf, in denen je ein Halterungsseil 5 mittels Ösen 6 befestigt ist. Die Halterungsseile 5 sind mit einem ortsfesten Bauteil 7 oder einem weiteren Hochdruckschlauch verbunden.

Der Hochdruckschlauch 2 weist einen beispielsweise aus Gummi bestehenden Innenmantel 8, eine Armierung 10 und einen beispielsweise ebenso aus Gummi bestehenden Außenmantel 9 auf. An dem Außenmantel 9 ist die Sicherungsmanschette 1 durch einen Vulkanisations- und/oder Klebevorgang befestigt, wobei eine vollflächige Verbindung zwischen der Innenseite der Sicherungsmanschette 1 und dem Außenmantel 9 des Schlauchs entsteht. Der Hochdruckschlauch 2 ist über eine Schlauchkupplung 11 mit einem Anschluß 12 einer nicht dargestellten Hochdruckwasserstrahlmaschine verbunden.

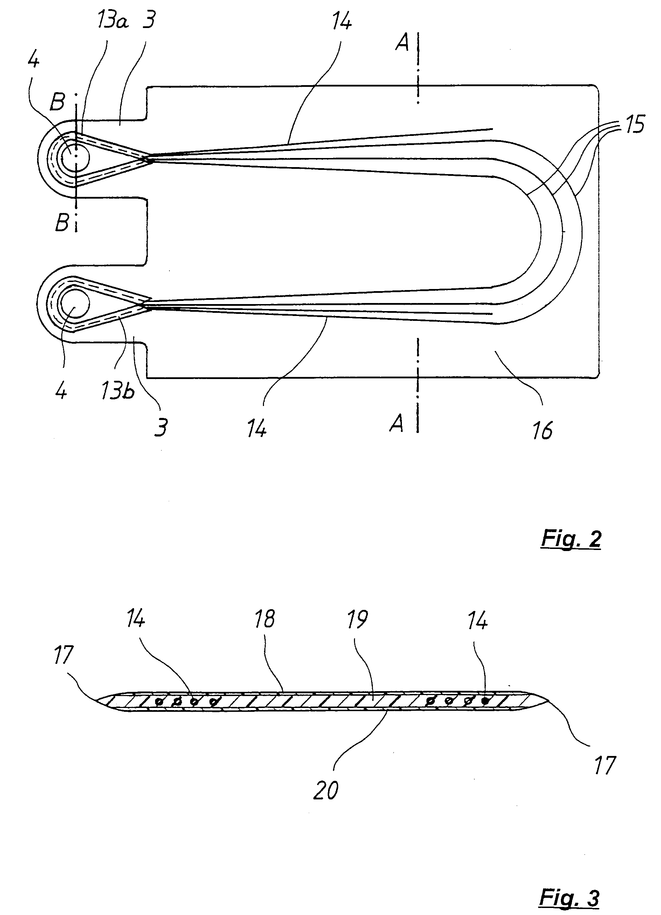

In jedem Befestigungsglied 3 ist eine Kausche 13 eingebettet, die von mindestens einem hier aus Aramid bestehenden Zugseil 14 außen umschlungen wird. Das Zugseil 14 ist endlos in der Sicherungsmanschette 1 verlegt, wobei nebeneinander mehrere Schlaufen 15 (Fig. 2) gebildet sind.

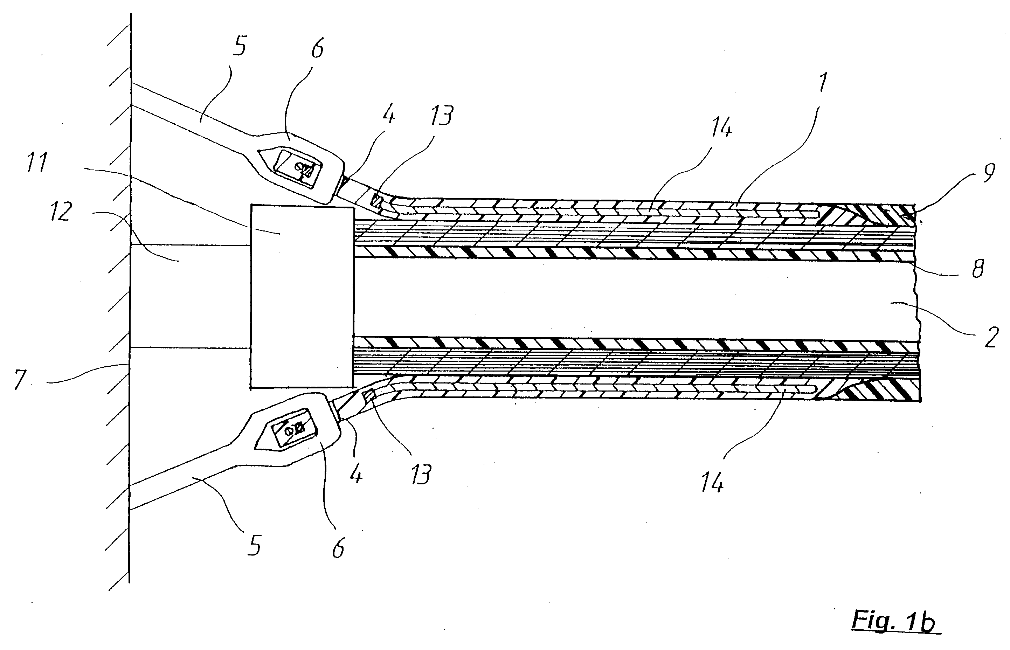

Gemäß Fig. 1b ist die Sicherungsmanschette 1 direkt auf den Stahlseilarmierungen 10 des Hochdruckschlauchs 2 aufgeklebt oder aufvulkanisiert, dessen z.B. aus einem Kunststoffmaterial bestehender Außenmantel auf dem betreffenden Endabschnitt entfernt worden ist.

Bei dem in Fig. 2 dargestellten Pflaster 16 zur Bildung einer Manschette 1 nach Fig. 1 sind die aus einem Zugseil bestehenden Zugseile in der dargestellten Form endlos in dem Pflaster 16 verlegt. Ausgehend von dem in Fig. 2 oben dargestellten einen Ende läuft das Zugseil 14 um die obere Kausche 13a und dann unter Bildung der Schlaufe 15 im anderen Endbereich des Pflasters zu der unteren Kausche 13b, umschlingt diese Kausche 13b und wird unter Bildung einer weiteren beabstandeten Schlaufe 15 wieder zurück zu der oberen Kausche 13a geführt. Somit sind in dem Pflaster 16 mehrere schlaufenförmig und nebeneinander angeordnete Abschnitte des Zugseils vollständig eingebettet. Wird nun dieses Pflaster 16 zur Bildung der Sicherungsmanschette 1 um den Hochdruckschlauch 2 gelegt und durch einen Vulkanisations- oder Klebevorgang befestigt, so kann eine optimale Kraftverteilung in der Sicheurngsmanschette 1 erzielt werden, da die auftretenden Zugkräfte auf die einzelnen Schlaufen 15 des Zugglieds 14 verteilt werden.

Die Breite des Pflasters 16 und der Abstand der Befestigungsteile 3 zueinander sind dem Außendurchmesser des Hochdruckschlauchs 2 derart angepaßt, daß sich in der Sicherungsmanschette 1 die Längskanten des Pflasters 16 überlappen und die Befestigungslaschen 3 sich diametral gegenüberliegen, wenn das Pflaster 16 unter Bildung der Sicherungsmanschette 1 an dem Hochdruckschlauch 2 vollflächig und anliegend befestigt ist.

Die Fig. 3 zeigt einen Schnitt durch das Pflaster 16 entlang der Linie A-A. Die Längskanten 17 des Pflasters 16 sind verjüngt auslaufend ausgebildet. Dadurch können sich die Längskanten 17 beim Anordnen des Pflasters 16 auf dem Hochdruckschlauch 2 überlappen, ohne daß eine Durchmesservergrößerung der Sicherungsmanschette 1 auftritt. Das Pflaster 16 weist außen eine Schutzschicht 18 aus einem verschleiß- und witterungsbeständigen Material auf. Unterhalb der Schutzschicht 18 ist eine Kernschicht 19 angeordnet, die eine hohe Haftfestigkeit gegenüber den Zugseilen 14 und damit eine gute Kraftübertragung gewährleistet. In diese Kernschicht 19 sind die Zugseile 14 unter Bildung der Schlaufen 15 nebeneinander eingebettet. Unterhalb der Kernschicht 19 ist eine Verbindungsschicht 20 angeordnet, welche ohne weitere mechanische oder chemische Vorbehandlung auf dem Außenmantel 9 des Hochdruckschlauchs 2 verklebt oder vulkanisiert werden kann.

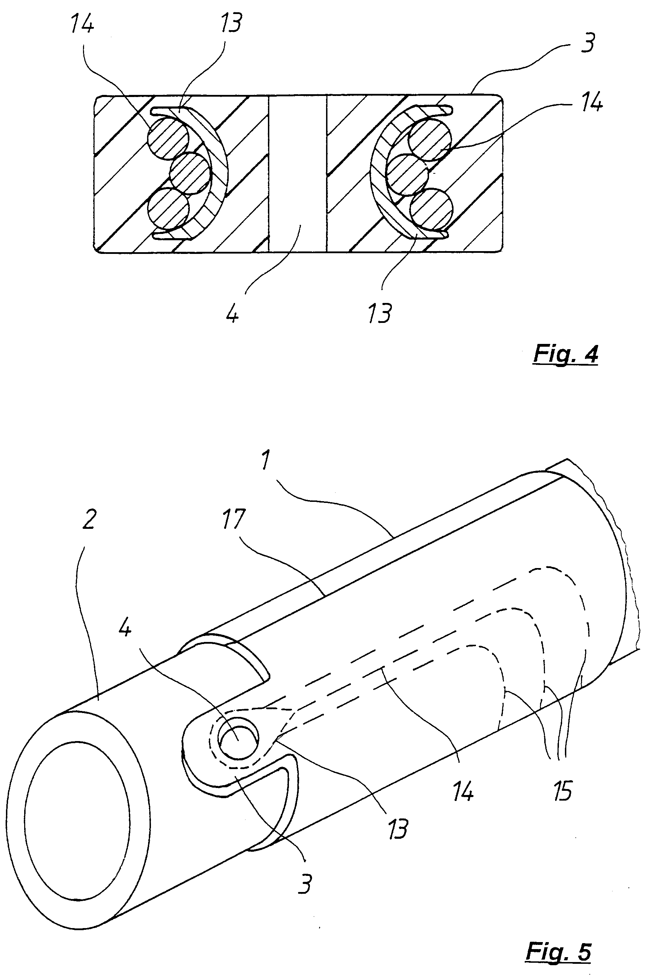

In der Fig. 4 ist eine Lasche im Querschnitt entlang der Linie B-B der Fig. 2 dargestellt. Die Kausche 13 ist vollständig in das Laschenmaterial eingebettet. Die Öffnung 4 ist etwa am Flächenschwerpunkt der Innenfläche der Kausche 13 angeordnet. Die Kausche 13 weist einen außen konkaven Querschnitt auf, so daß die Zugseile 14 in dieser konkaven Aushöhlung aufgenommen werden. Die Zugseile 14 sind in das Gummi- oder Kunststoffmaterial der an die Manschette angeformten Lasche eingebettet, wodurch es zu einer weiter verbesserten Kraftübertragung von dem Halterungsseil 5 zu den Zugseilen 14 kommt.

Wie aus Fig. 5 ersichtlich, ist der Druckschlauch 2 vollständig von der Sicherungsmanschette 1 umschlossen, und die Manschette ist auf diesem durch einen Vulkanisations- und/oder Klebevorgang befestigt. Die Breite des ursprünglichen Pflasters 16 ist derart gewählt, daß sich das Pflaster bei einer vollflächigen Anlage an dem Hochdruckschlauch 2 nur an den verjüngten Längskanten 17 überlappt, wodurch sich eine bündige Außenfläche der Sicherungsmanschette 1 ergibt. Die Zugseile 14 sind endlos um die Kauschen 13 herum verlegt, wobei mehrere Schlaufen 15 gebildet sind. Das Zugseil verläuft dabei ausgehend von der Kausche 13 unter Bildung etwa der äußeren Schlaufe 15 zu der nicht dargestellten weiteren Kausche auf der Rückseite und von dort um diese Kausche herum unter Bildung der zweiten Schlaufe wieder zurück zu der vorderseitigen Kausche 13, usw. Durch die derartige vorteilhafte Verlegung des Zugseils wird eine optimale Kraftübertragung ausgehend von dem Hochdruckschlauch 2 über die Verbindungsschicht 20, die Kernschicht 19, die in der Kernschicht 19 eingebetteten Schlaufen 15 des Zugseils, die Kausche 13 und schließlich zu der in der Öffnung 4 angeordneten Halterungsöse 6 (nicht dargestellt) erzielt.

Die Anordnung der Zugseile 14 in der Sicherungsmanschette 1 ist jedoch nicht auf die dargestellte Schlaufenform beschränkt. Die Zugseile können auch wellenförmig, als Gewebeschlauch, als geflochtenes Paket, gewickelt, spiralförmig und/oder in mehreren Schlaufen in der Sicherungsmanschette 1 angeordnet werden. Durch etwa einen wellenförmigen Verlauf der Zugseile könnte eine bessere Dämpfung der auftretendens Zugkraft erzielt werden, da sich zunächst die wellenförmigen Zugseile geradeziehen und erst dann die volle Kraftübertragung von den Zugseilen auf die Manschettenschichten erfolgen würde. In Anpassung an die jeweilige gewählte Materialart der Zugseile oder an die jeweiligen gewählten Materialkombinationen derselben kann auch eine geflochtene Ausbildung der Zugseile von Vorteil sein.

## Patentansprüche

1. Sicherungsmanschette für Hochdruckschläuche bestehend aus einem auf den Hochdruckschlauch aufgeklebten oder aufvulkanisierten Gummi- oder Kunststoffmantel, in dem mindestens ein Zugseil im wesentlichen axial verlaufend angeordnet ist, das am Stirnende ein ösenartiges Befestigungsglied aufweist,
dadurch **gekennzeichnet,** daß
ein oder mehrere Zugseile (14) nebeneinander in mehreren Schlaufen im Gummi- oder Kunststoffmantel (1) vollständig eingebettet sind.

2. Sicherungsmanschette nach Anspruch 1,
dadurch gekennzeichnet, daß
die Zugseile (14) in einer Kernschicht (19) eingebettet sind.

3. Sicherungsmanschette nach Anspruch 1 oder 2,
dadurch gekennzeichnet, daß
das Befestigungsglied (3) aus mindestens einer stirnseitig angeformten, zugfesten Lasche besteht.

4. Sicherungsmanschette nach einem der Ansprüche 1 bis 3,
dadurch gekennzeichnet, daß
die Laschen aus dem Manschettenmaterial bestehen und jeweils eine formsteife, eingebettete Kausche (13) mit nach außen konkavem Querschnitt aufweisen, die außenseitig von den Zugseilen (14) teilweise umschlungen sind.

5. Sicherungsmanschette nach einem der Ansprüche 1 bis 4,
dadurch gekennzeichnet, daß
die Zugseile (14) aus einem einzigen Zugseil gebildet sind, das endlos in mehreren Schlaufen in der Manschette und über die jeweiligen Kauschen (13) verlaufend verlegt ist.

6. Sicherungsmanschette nach einem der Ansprüche 1 bis 5,
dadurch gekennzeichnet, daß
die Zugseile (14) aus Metalldrähten und/oder aus hochfesten, polymeren Textilfasern, beispielsweise Aramid, gebildet sind.

7. Pflaster zur Herstellung einer Sicherungsmanschette für Hochdruckschläuche,
gekennzeichnet durch
in dem aus Gummi oder Kunststoff bestehenden Pflastermaterial fest eingebettete strangförmige Zugseile (14), die nebeneinander und schlaufenförmig angeordnet sind, und
mindestens eine stirnseitig angeformte und mit den Zugseilen (14) fest verbundene gelochte Lasche (3).

8. Pflaster nach Anspruch 7,
dadurch gekennzeichnet, daß
die Pflasterränder verjüngte sind.

9. Pflaster nach Anspruch 7 oder 8,
dadurch gekennzeichnet, daß
das Pflastermaterial mehrschichtig aufgebaut ist und in seiner zentralen Kernschicht (19) die Zugseile (14) aufweist.

10. Verfahren zum Erzeugen einer Sicherungsmanschette für Druckschläuche, bei dem ein Pflaster (16), in dem ein oder mehrere strangförmige Zugseile (14) in das Pflastermaterial eingebettet sind und das stirnseitig eine mit den Zugseilen (14) verbundene Lasche (3) aufweist, auf einen Druckschlauch (2) durch einen Vulkanisations- und/oder Klebevorgang aufgebracht wird, wobei das Pflaster (16) eine vollflächige Verbindung mit dem Druckschlauch (2) einnimmt und vollständig an die Außenfläche des Druckschlauches (2) gelegt wird.
